(19) 

Europäisches
Patentamt
European
Patent Office
Office européen
des brevets

(11) **EP 4 779 882 A1**

(12) **EUROPEAN PATENT APPLICATION**

(43) Date of publication:
**22.07.2026 Bulletin 2026/30**

(21) Application number: **25305072.8**

(22) Date of filing: **21.01.2025**

(51) International Patent Classification (IPC):
*H04B 5/77* (2024.01)     *H04W 4/80* (2018.01)

(52) Cooperative Patent Classification (CPC):
**H04B 5/77; H04W 4/80**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **NXP B.V.
5656 AG Eindhoven (NL)**

(72) Inventors:
• LAJON, Marc Paul Pierre
  31023 Toulouse (FR)
• STARK, Michael
  5656AG Eindhoven (NL)
• SCHREINER, Arnaud
  5656AG Eindhoven (NL)

(74) Representative: **Schwarzweller, Thomas
NXP Semiconductors Germany GmbH
Intellectual Property Group
Beiersdorfstraße 12
22529 Hamburg (DE)**

(54) **TRANSPORT LAYER WAIT-TIME EXTENSION FOR NFC COMMUNICATIONS**

(57)     Aspects of this disclosure are directed to Methods and devices for exchanging data using NFC from a listener device to a poller device. The method comprises the poller: sending an NFC Data Exchange Format, NDEF Write procedure including an NDEF Write procedure command, requesting the listener to write data into a readable memory; reading, not before the end of a wait time following the sending the NDEF Write procedure command, a request-for-time-extension, TE-REQ, defining an extended wait time; in response to the TE-REQ, sending an acknowledgement-of-time-extension, TE-ACK; and reading, not before the end of an extended wait time following the sending the TE-ACK, an NDEF response to the NDEF Write procedure command. The devices are configured accordingly.

**Fig. 4**

EP 4 779 882 A1

**Description**

FIELD OF THE DISCLOSURE

This present disclosure relates methods and devices for data transfer and data exchange using near field communication, NFC, technology.

BACKGROUND

NFC is a technology to enable short range communication (typically over a range of 5 cm or less) between devices. For example, information (such as requests or data) can be transferred from a first device, commonly referred to as a reader or more generally as a poller, to a second device, commonly referred to as a tag or more generally as a listener, by magnetic field induction. Similarly, information such as data can be transferred from the second device to the first device.

NFC technology has been standardised by the International Standards Organisation (ISO) and adopted under various ISO/IEC standards, notably 14443-3, 18092 and 15693-3. Whereas NFC technology was originally conceived for an active reader device interacting with a passive tag, the technology has developed to enable more sophisticated implementations, such that one or both of the reader and tag can be implemented as a wide range of devices, which may be passive or active - and are thus more appropriately designated as poller and listener, instead of reader and tag. Bi-directional data exchange between a reader and a tag has been standardised according to a Tag NDEF exchange protocol (TNEP), established by the NFC Forum industry association. One development is the incorporation of the listener within a multifunctional device., which is enabled to respond to a range of requests from the poller. Some of these requests may require the listener device to, for example, perform sensing operations, or calculations or other processing of data prior to being able to respond to the request. The time required for such calculations or other processing may not be known a priori.

SUMMARY

According to a first aspect of the present disclosure, there is provided a method of transferring data using near field communication (NFC) from a listener device to a poller device, the method comprising the poller: performing an NFC Data Exchange Format, (NDEF) Write procedure including an NDEF Write procedure command, requesting the listener to write data into a readable memory; reading, not before the end of a wait time following the preforming the NDEF Write procedure command, a request-for-time-extension, TE-REQ, defining an extended wait time; in response to the TE-REQ, sending an acknowledgement-of-time-extension, TE-ACK; and reading, not before the end of an extended wait time following the sending the TE-ACK, an NDEF response to the NDEF Write procedure command. The NDEF response is typically stored in the readable memory. By using a NDEF record to request and acknowledge the wait-time-extension, the method operates at the OSI (Open Systems Interoperability) layer4 (transport layer), and is thus adaptable to a variety of applications, agnostic to the underlying data link layer protocol (at OSI layer 2), and in particular is independent of the NFC tag type protocol, supported by the listener. The wait time may be pre-defined, for example according to a TNEP standard, details of which will be described in more detail hereinbelow. The extended wait time may be set by the listener device. It will be appreciated that both the wait time, and the extended wait time, are minimum time periods; the poller may wait for a time interval (or time period) which is exactly equal to the wait time (or extended wait time, as the case may be), or may wait for a time interval which is greater than the respective wait time or extended wait time.

In one or more embodiments, the NDEF response to the NDEF Write procedure command is a further TE-REQ. Such methods therefore include a first time extension request TE-REQ and acknowledgement TE-ACK, and one or more further time extension request(s) TE-REQ and acknowledgement(s) TE-ACK. They thus include a, as a sub-method, a method having the steps described above, but initiated by a Read procedure command, in place of the Write procedure command.

In one or more embodiments, the extended wait time is an integer multiple of the wait time. In one or more other embodiments the extended wait time is a linear function of an integer value included in the TE-REQ.

In one or more embodiments, the wait time is a Tag NDEF exchange protocol, TNEP, service parameter waiting time, $t_{wait}$. In one or more embodiments, the wait time is pre-determined by the poller device reading the TNEP waiting time from the readable memory. In one or more embodiments, the TE-REQ is configured as a single NDEF record type message. Moreover, the TE-ACK may be formatted as a single NDEF record type message.

According to a second aspect of the present disclosure, there is provided a device configured to poll a listener device and transfer data using near field communication, NFC, from the listener device, and comprising: an antenna configured to generate NFC signals; and a processor configured to: send, by means of the antenna, an NDEF Write procedure command, requesting the listener device to write data into a readable memory; read, by means of the antenna, at the end of a wait time following the sending the NDEF Write procedure command, a request-for-time-extension, TE-REQ, defining an extended wait time; in response to the TE-REQ, send an acknowledgement-of-time-extension, TE-ACK; and read, at the end of an extended wait time following sending the TE-ACK, an NFC Data Exchange Format, NDEF, response to the NDEF Write procedure command. In one or more embodiments, the extended wait time is an integer multiple of the wait time. In one or more embodiments, the wait time is a tag NDEF exchange protocol, TNEP, service parameter waiting time, $t_{wait}$. In one or more embodiments, the wait time is pre-determined by reading the TNEP waiting time from the readable memory.

In one or more embodiments, the TE-REQ is configured as a single NDEF record type message. The TE-ACK may be formatted as a single NDEF record type message.

According to a third aspect of the present disclosure, there is provided a listener device configured to be polled by a poller device and transfer data using near field communication, NFC, to the poller device, and comprising: an antenna configured to receive NFC signals; circuit configured to modulate an RF field for carrying NFC signals, according to a readable memory; and a processor configured to: receive, via the antenna, an NFC Data Exchange Format, NDEF, Write procedure command requesting to write data into the readable memory; in response thereto load into the readable memory, before the end of a wait time following the receiving the NDEF Write procedure command, a request-for-time-extension, TE-REQ, defining an extended wait time; receive, via the antenna, an acknowledgement-of-time-extension, TE-ACK; and within the extended wait time of the TE-ACK, load data into the readable memory, the data comprising an NFC response to the NDEF Write procedure command.

In one or more embodiments, the extended wait time is an integer multiple of the wait time. In one or more embodiments, the extended wait time is a linear function of an integer value included in the TE-REQ.

BRIEF DESCRIPTION OF THE DRAWINGS

Reference will now be made to the accompanying drawings wherein:

FIG. 1 illustrates, schematically, an NFC system ;
FIG. 2 shows an example structure of an NDEF message "TE-REQ;
FIG. 3 shows an example structure of an NDEF message "TE-ACK; and
FIG. 4 shows, schematically, a timeline according to one or more embodiments of the present disclosure.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments.

DETAILED DESCRIPTION

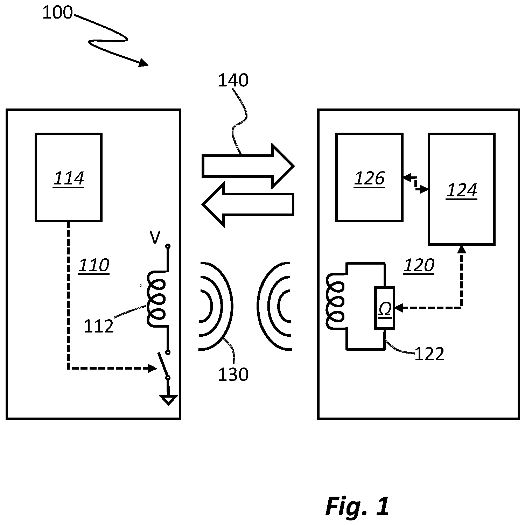

FIG. 1 shows, schematically, an NFC system 100 comprising a poller 110 and a listener 120. The poller 110 and listener 120 are sufficiently closely spaced that a magnetic field generated by the poller, and in particular by an antenna 112 may be modified by the inductance of a circuit such as a resonant circuit, shown schematically at 122, in the listener 120. Each of the poller and listener includes a processor such as a microprocessor, 114 and 124 respectively. As will be familiar to the person skilled in the art of NFC, the inductance is modulated in a binary manner, and the resulting change in the magnetic field is sensed by the poller 110. Information stored in the listener 120, and in particular in a read memory 126 of the listener, may be sequentially transferred bit-by-bit to the poller 110.

The information is formatted according to the NDEF, in an NDEF message composed of one or more NDEF records.

As shown schematically at 140, the poller 110 and the listener 120 may be provided with one or more additional modalities for communication, such as, without limitation, Wi-Fi, or Bluetooth or the like. For some applications, the poller may initiate a first level of identification and authentication of a listener device using such other (non-NFC) modality, prior to continuing the communication using NFC. NFC has a particular advantage as regards secure communication since it is inherently short range. Specifically, due to the limited range, NFC is particularly suited for communication of sensitive or confidential information (such as, without limitation, personal information or sensitive personal information, such as identity card, passport or driving licence data, biometrics, and the like).

An industrial consortium referred to as the NFC Forum have developed and standardised a protocol for use with, in particular, mobile devices, so as to allow handover between a first communication modality, such as Wi-Fi or Bluetooth, to NFC protocol. As mentioned above, trhis is referred to as the tag NDEF exchange protocol (TNEP). The TNEP is an application-level protocol for sending and retrieving application data units, in the form of NFC Data Exchange Format (NDEF) messages, between one Reader/Writer and an NFC Tag Device . It allows the exchange of NDEF Messages in both directions. In summary, TNEP is based on legacy NDEF operation, encapsulating commands and responses, achieved by NDEF write and read operations. When using TNEP, the poller 110 writes an NDEF message by using an NDEF Write procedure, containing a command, and then performs an NDEF read operation in order to read the response.

The person skilled in the art of NFC, NDEF and TNEP will appreciate that, at the RF level, a Write procedure includes the poller both sending the message, or command, (generally referred to herein as the "NDEF Write procedure command") and receiving an indication, generated by the listener, that the message has been "well-received". However, the "well-received" indication, or acknowledgement by the listener, does not any transfer data. As used herein, "data transfer" will be understood not to include or embrace such a "well-received" acknowledgement.

TNEP provides for a fixed wait time between the write command and the read operation, which may also be referred to the read response. In particular, the TNEP minimum waiting time $t_{wait}$ is the time measured between the end of the last write command of an NDEF Read or Write procedure and the start of the first command of the first NDEF Read procedure following the NDEF Write procedure. This is provided through a TNEP service parameter record command "waiting time", $t_{wait}$, in an initial NDEF message The waiting time $t_{wait}$ is defined, according to the TNEP standard, through:

$$t_{wait} = 2^{\left(\frac{WT\_INT}{4} - 1\right)}$$ ms, where WT_INT is a 6-bit variable, taking any value between 0 and 63 (and corresponds to the 6 least significant bits of the waiting time field in the TNEP-defined service Record Parameter payload).

TNEP also provides a maximum number of waiting time extensions in a TNEP Parameter record of the initial NDEF message to announce the maximum number of requested waiting time extensions ($N_{wait}$) to be used, in a trial-and-error mechanism, before to get a response.

However, in some implementations, the listener 120 may not be able to make the data to be transferred immediately available in the read memory within the waiting time $t_{wait}$ - for example, in the case that sensor measurements, calculations or other processes are required in order to determine the data to be transferred. Moreover, the time required by the listener 120 in order to perform the sensor measurements, calculations or processes may vary between different measurements, calculations or processes. In the case that the listener 120 requires more time to perform the measurements, calculations or processes than is provided for by the TNEP service parameter command $t_{wait}$, the listener should provide an empty message to say that there is no data available yet. Some listener implementations cannot be interrupted by the poller in their process to generate the response, otherwise it needs to restart the process from the beginning. In some other implementations, the listener can provide the empty message information, but the trial-and-error mechanism to repeat the read response to a limit of N times ($N_{wait}$), provided in the TNEP Service parameter Record, will not be sufficient.

The skilled person will appreciate that this process may be inefficient, particularly in the instance that the time required by the listener 122 to generate the response may vary widely according to the request nature: if the service parameter waiting time $t_{wait}$ is set too short to respond to the request, when the read request is received, this may result in many read failures and repetitions; conversely, if the service parameter waiting time is set too long, the data transmission speed is reduced.

The skilled person will be aware that it has been proposed to provide for an extension of waiting time on the data link layer, that is to say the Open Systems interconnection (OSI) layer "2", for example, in the NFC Forum digital protocol technical specification, or the ISO/IEC 14443-4 specification part 4. However, providing for extension of the waiting time at the data link layer, OSI layer 2, does not allow for straight-forward data-and-process-dependent adaptation of the waiting time, since the data is handled at OSI layer 4. Furthermore, the extension to the waiting time provided in the data link layer, OSI layer 2, tends to be specific to an individual type of tag, and so is not "tag-agnostic".

According to one aspect of the present disclosure, a temporary extension may be provided to the waiting time. Thus this disclosure proposes a method of exchanging data using NFC and in particular of transferring data from a listener device to a poller device, the method comprising the poller: performing an NDEF Write procedure, requesting the listener to write data into a readable memory; performing an NDEF Read procedure, at the end of a wait time following the performing the NDEF Write procedure, thereby reading a request-for-time-extension (TE-REQ), defining an extended wait time; in response to the TE-REQ, sending an acknowledgement-of-time-extension, TE-ACK; and reading, by an NDEF Read procedure and at the end of an extended wait time following the sending the TE-ACK, an NDEF response to the Write command of the initial NDEF Write (or Read) procedure. Such a method may involve defining a pair of new NDEF records "RTE-REQ" and "RTE-ACK".

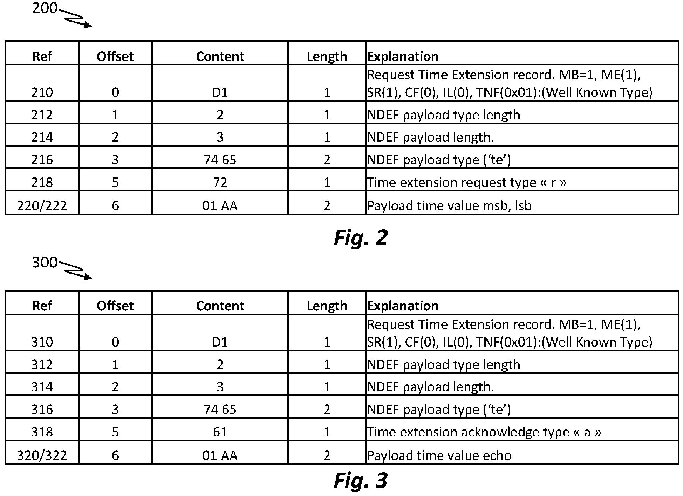

An example structure of an NDEF message "RTE-REQ" 200 is shown in FIG. 2. The NDEF message 200 consists of a header 210 (0xD1 indicative of 1 short record), a type-length indicator 212 (of length 0x02), a payload-length indicator 214 (of length 0x03), payload type 216 ("te") and a payload. The payload consists of three bytes: the first byte being TE request type 218 "r", indicative of the request, and the other two bytes of the payload, 220 and 222 are respectively, the most significant byte, MSB, and least significant byte, LSB of the requested extension to the waiting time.

An example structure of an NDEF message "RTE-ACK" 300 is shown in FIG. 3. This NDEF message is similar to the request message shown in FIG. 2, and consists of a header 310 (of length 0xD1), a type-length indicator 312 (of length 0x02), a payload-length indicator 314 (of length 0x03), payload type 316 "te", and a payload. The payload comprises three bytes the first byte 318 of which indicates the TE acknowledgement type ("a"); the final two bytes of the payload, 320 and 322 reflect the magnitude of the extension, back to the poller 110, in order to confirm correct receipt. The two bytes of the waiting time extension are typically transmitted in "big-endian" order, with the most significant byte first as defined in the NFC Forum NDEF Specification.

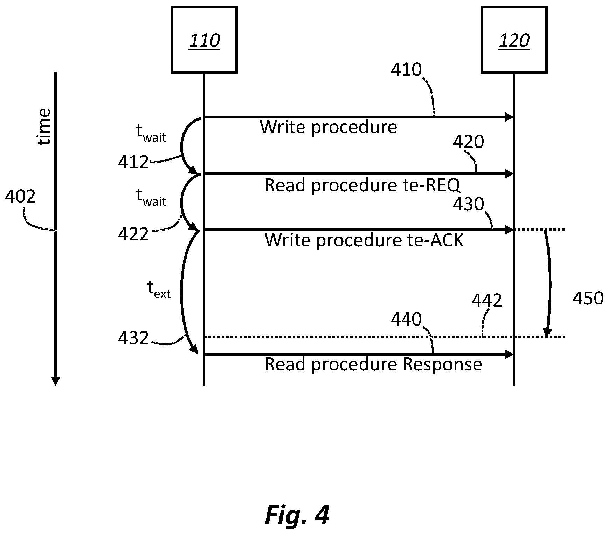

FIG. 4 illustrates a method according to the present disclosure: In the FIG., time 402 flows from top to bottom, and it shows signal transmitted from the poller 110 to the listener 120 from left to right. Information is transferred from the listener 120 to the poller 110, by modulating the magnetic field generated by the poller. In any case, the arrows point from the left to right, and represent signals, which are normally all generated, or initiated, by the poller 110.

As shown in the figure, the method starts with a NDEF Write procedure 410 from the poller 110. This procedure requires the listener 120 to write data into the read memory, in preparation for the data to be "read out" from the memory. In the usual instance, (not shown), the listener writes the data into the memory, which data is then read out to the poller 110 by means of the poller performing an "NDEF Read procedure". The poller does not immediately perform the NDEF Read procedure, but waits, after performing the command of the NDEF Write procedure 410, for the time 412 indicated by the waiting time parameter $t_{wait}$.

However, according to an embodiment of the present disclosure, the data may not be available and stored in the read memory in time to be read out. In that case, listener 120 stores a NDEF record "TE-REQ" in the read memory. The poller 110 reads the memory, as shown at 420, and identifies a request for an extended waiting time. The poller 110 waits for the unmodified (or normal, unexteneded) waiting time indicated by the waiting time parameter $t_{wait}$ 422, and sends back (that is to say writes) an acknowledgement of the request, in the form of the NDEF record "TE-ACK". Now the poller 110 waits for an extended time, which is larger than $t_{wait}$ (shown in FIG. 4 at 432 as "$t_{ext}$"), prior to reading out the data in the listener's read memory, by means of the read command 440. By instructing poller not to come with a NEDF Read procedure before extended wait time, and providing the response in the read memory before the extended time, the listener ensures that the NDEF read procedure 440 does not occur until the data is ready to be read out (as shown by the dotted line 442).

As already described above, the extended waiting time is communicated from the listener to the poller in the NDEF record "RTE-REQ". The duration of the extended waiting time may be chosen by the listener based on an anticipated time required to load its readable memory with the response to the write command of the Write procedure. For example, the listener device may store, for example in a look-up table, the known or predetermined time required for particular calculations, or for specific sensing or measurement operations or other actions which it may be required to perform in response to, or to fulfill, the Write procedure.

Once the (typically two- byte) value for TE is selected, the waiting time extension may be calculated (in ms) by any suitable method. A particularly simple method is simply to scale the system time $t_{wait}$, by the numerical value of TE (which is simply:

$$LSB\_TE + (2^8) * MSB\_TE .$$

Then

$$t_{ext} = t_{wait} * (LSB\_TE + 2^8 * MSB\_TE) \ \text{(in ms)}.$$

A nonlimiting alternative is to make the extension a linear function of the value of TE:

$$t_{ext} = (^{4096}/_{f_c} * (LSB\_ \ TE + 2^8 * MSB\_ \ TE) \ \text{(in ms)}$$

where $f_c$ is 1.356MHz.

A further, non-limiting alternative is to calculate the time in a similar way that $t_{wait}$ is calculated from WT_INT:

$$t_{ext} = 2^{(MSB\_TE)/(LSB\_TE)-1} \ \text{(in ms)}.$$

Moreover, in the case that the listener requires an extended period to perform calculations of processes before being in a position to write the data into the read memory, it may be in parallel with the TE-REQ and TE-ACK exchange 420 and 430.

The waiting time extension is generally temporary, in that the poller 110 applies it only once: that is to say, in the event the frame received as the response at the end of the extended wait time does not include the data, the poller then retries, after the "standard" un-extended waiting time $t_{wait}$. In addition, if there is no response at all, then the poller treats this as a time-out according to the well-established TNEP protocols.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilised and derived therefrom, such that structural and logical substitutions and changes may be made without departing from the scope of this disclosure. Figures are also merely representational and may not be drawn to scale. Certain proportions thereof may be exaggerated, while others may be minimised. Accordingly, the specification and drawings are to be regarded in an illustrative rather than a restrictive sense.

Although specific embodiments have been illustrated and described herein, it should be appreciated that any arrangement calculated or constructed to achieve the same or a similar purpose may be substituted for the specific embodiments shown. This disclosure is intended to cover any and all adaptations or variations of various embodiments. Combinations of the above embodiments, and other embodiments not specifically described herein, are contemplated by the subject disclosure.

For instance, one or more features or aspects from one or more embodiments can be combined with one or more features or aspects of one or more other embodiments. In one or more embodiments, features that are positively recited can also be negatively recited and excluded from the embodiment with or without replacement by another structural and/or functional feature. The steps or functions described with respect to the embodiments of the subject disclosure can be performed in any order. The steps or functions described with respect to the embodiments of the subject disclosure can be performed alone or in combination with other steps or functions of the subject disclosure, as well as from other embodiments or from other steps that have not been described in the subject disclosure. Further, more than or less than all of the features described with respect to an embodiment can also be utilised.

Less than all of the steps or functions described with respect to the exemplary processes or methods can also be performed in one or more of the exemplary embodiments. Further, the use of numerical terms to describe a device, component, step or function, such as first, second, third, and so forth, is not intended to describe an order or function unless expressly stated so. The use of the terms first, second, third and so forth, is generally to distinguish between devices, components, steps or functions unless expressly stated otherwise. Additionally, one or more devices or components described with respect to the exemplary embodiments can facilitate one or more functions, where the facilitating (e.g., facilitating access or facilitating establishing a connection) can include less than every step needed to perform the function or can include all of the steps needed to perform the function.

The Abstract of the Disclosure is provided with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

**Claims**

1.  A method of transferring data using near field communication, NFC, from a listener device to a poller device, the method comprising the poller:

    performing an NDEF Write procedure including an NDEF Write procedure command, requesting the listener to write data into a readable memory;
    reading, not before the end of a wait time following the performing the NDEF Write procedure command, a request-for-time-extension, TE-REQ, defining an extended wait time;
    in response to the TE-REQ, sending an acknowledgement-of-time-extension, TE-ACK; and
    reading, not before the end of an extended wait time following the sending the TE-ACK, an NDEF response to the NDEF Write procedure command.

2.  The method of claim 1, wherein the NDEF response to the NDEF Write procedure command is a further TE-REQ.

3.  The method of claim 1 or 2, wherein the extended wait time is an integer multiple of the wait time.

4.  The method of claim 1 or 2, wherein the extended wait time is a linear function of an integer value included in the TE-REQ.

5. The method of any preceding claim, wherein the wait time is a Tag NDEF Exchange Protocol, TNEP, service parameter waiting time, $t_{wait}$.

6. The method of claim 5, wherein the wait time is pre-determined by the poller device reading the TNEP waiting time from the readable memory.

7. The method of any preceding claim, wherein the TE-REQ is configured as a single NDEF record type message.

8. The method of any preceding claim, wherein the TE-ACK is configured as a single NDEF record type message.

9. A device configured to poll a listener device and transfer data using near field communication, NFC, from the listener device, and comprising:

an antenna configured to generate NFC signals; and a
a processor configured to:

send, by means of the antenna, an NFC Data Exchange Format, NDEF, Write procedure command, requesting the listener device to write data into a readable memory;
read, by means of the antenna, not before the end of a wait time following the sending the NDEF Write procedure command, a request-for-time-extension, TE-REQ, defining an extended wait time;
in response to the TE-REQ, send an acknowledgement-of-time-extension, TE-ACK; and
read, not before the end of an extended wait time following sending the TE-ACK, an NFC response to the NDEF Write procedure command.

10. The device of claim 9, wherein the extended wait time is an integer multiple of the wait time.

11. The device of claim 9 or 10, wherein the extended wait time is a linear function of an integer value included in the TE-REQ.

12. The device of claims 9 to 11, wherein the wait time is a tag NDEF exchange protocol, TNEP, service parameter waiting time, $t_{wait}$.

13. A listener device configured to be polled by a poller device and transfer data using near field communication, NFC, to the poller device, and comprising:

an antenna configured to receive NFC signals;
circuit configured to modulate an RF field for carrying NFC signals, according to a readable memory; and
a processor configured to:

receive, via the antenna, an NFC Data Exchange Format, NDEF, Write procedure command requesting to write data into the readable memory;
in response thereto load into the readable memory, before the end of a wait time following the receiving the NDEF Write procedure command, a request-for-time-extension, TE-REQ, defining an extended wait time;
receive, via the antenna, an acknowledgement-of-time-extension, TE-ACK; and
within the extended wait time of the TE-ACK, load data into the readable memory, the data comprising an NFC response to the NDEF write procedure command.

14. The listener device of claim 13, wherein the extended wait time is an integer multiple of the wait time.

15. The device of claim 13 or 14, wherein the extended wait time is a linear function of an integer value included in the TE-REQ.

**Fig. 1**

200

| Ref | Offset | Content | Length | Explanation |
|---|---|---|---|---|
| 210 | 0 | D1 | 1 | Request Time Extension record. MB=1, ME(1), SR(1), CF(0), IL(0), TNF(0x01):(Well Known Type) |
| 212 | 1 | 2 | 1 | NDEF payload type length |
| 214 | 2 | 3 | 1 | NDEF payload length. |
| 216 | 3 | 74 65 | 2 | NDEF payload type ('te') |
| 218 | 5 | 72 | 1 | Time extension request type « r » |
| 220/222 | 6 | 01 AA | 2 | Payload time value msb, lsb |

*Fig. 2*

300

| Ref | Offset | Content | Length | Explanation |
|---|---|---|---|---|
| 310 | 0 | D1 | 1 | Request Time Extension record. MB=1, ME(1), SR(1), CF(0), IL(0), TNF(0x01):(Well Known Type) |
| 312 | 1 | 2 | 1 | NDEF payload type length |
| 314 | 2 | 3 | 1 | NDEF payload length. |
| 316 | 3 | 74 65 | 2 | NDEF payload type ('te') |
| 318 | 5 | 61 | 1 | Time extension acknowledge type « a » |
| 320/322 | 6 | 01 AA | 2 | Payload time value echo |

*Fig. 3*

Fig. 4

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | St Microelectronics: "M24SR64-Y Dynamic NFC/RFID tag IC with 64-Kbit EEPROM, NFC Forum Type 4 Tag and I2C interface Contents", , 1 September 2017 (2017-09-01), XP055884832, Retrieved from the Internet: URL:https://www.st.com/content/ccc/resource/technical/document/datasheet/group3/a5/1d/51/09/f6/13/4f/5b/DM00067892/files/DM00067892.pdf/jcr:content/translations/en.DM00067892.pdf [retrieved on 2022-01-28] * pages 21,25,30 * * page 34 - pages 35,42 * ----- | 1-15 | INV. H04B5/77 H04W4/80 |
| X | NFC FORUM: "NFC Digital Protocol Technical Specification", INTERNET CITATION, 17 November 2010 (2010-11-17), pages 1-175, XP002780618, Retrieved from the Internet: URL:http://cwi.unik.no/images/3/3b/NFC_forum_digital_protocol.pdf [retrieved on 2018-04-25] * page 88 * * pages 128-135 * * page 119 * * pages 37-38 * ----- | 1-15 | TECHNICAL FIELDS SEARCHED (IPC) H04B H04W |
| A | WO 2025/009441 A1 (TOSHIBA KK [JP]; TOSHIBA INFRASTRUCTURE SYSTEMS & SOLUTIONS CORP [JP]) 9 January 2025 (2025-01-09) * paragraphs [0028] - [0041]; figures 3,4 * ----- | 1-15 | |

The present search report has been drawn up for all claims

| Place of search | Date of completion of the search | Examiner |
|---|---|---|
| Munich | 4 June 2025 | Franz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...................................................................................................
& : member of the same patent family, corresponding document

EPO FORM 1503 03.82 (P04C01)

**EP 4 779 882 A1**

## ANNEX TO THE EUROPEAN SEARCH REPORT
## ON EUROPEAN PATENT APPLICATION NO.

EP 25 30 5072

This annex lists the patent family members relating to the patent documents cited in  the above-mentioned European search report.
The members are as contained in the European Patent Office EDP file on
The European Patent Office is in no way liable for these particulars which are merely given for the purpose of information.

04-06-2025

| Patent document cited in search report | Publication date | Patent family member(s) | Publication date |
|---|---|---|---|
| WO 2025009441 A1 | 09-01-2025 | JP 7556100 B1<br>JP 2025008457 A<br>WO 2025009441 A1 | 25-09-2024<br>20-01-2025<br>09-01-2025 |

EPO FORM P0459

For more details about this annex : see Official Journal of the European Patent Office, No. 12/82

12